Europäisches Patentamt

European Patent Office

Office européen des brevets

(11) Veröffentlichungsnummer: **0 215 363 B1**

(12) **EUROPÄISCHE PATENTSCHRIFT**

(45) Veröffentlichungstag der Patentschrift: **21.10.92**

(21) Anmeldenummer: **86112020.2**

(22) Anmeldetag: **30.08.86**

(51) Int. Cl.⁵: **H04N 1/10**

(54) **Abtasteinrichtung für Halbton-Durchsichtsvorlagen.**

(30) Priorität: **20.09.85 DE 3533590**

(43) Veröffentlichungstag der Anmeldung:
**25.03.87 Patentblatt 87/13**

(45) Bekanntmachung des Hinweises auf die
Patenterteilung:
**21.10.92 Patentblatt 92/43**

(84) Benannte Vertragsstaaten:
**BE CH DE FR GB IT LI NL**

(56) Entgegenhaltungen:
**EP-A- 0 097 724**
**EP-A- 0 144 856**
**US-A- 4 260 899**

(73) Patentinhaber: **Linotype-Hell Aktiengesellschaft**
**Mergenthaler Allee 55-75**
**W-6236 Eschborn(DE)**

(72) Erfinder: **Zelenka, Thomas**
**Damperhofstrasse 16**
**W-2300 Kiel(DE)**

**Beschreibung**

Die Erfindung betrifft eine Einrichtung zur Durchsichtsabtastung von Halbtonvorlagen in der elektronischen Reproduktionstechnik vorzugsweise für Flachbettabtaster.

Wird bei der Durchsichtsabtastung einer Bildvorlage (in der Regel ein Silberfilm) diese mit stark gerichtetem Licht durchstrahlt, so ergeben sich nach Durchgang des Lichtes andere Meßwerte für die Schwärzung, als wenn die Vorlage von diffusem Licht durchstrahlt worden wäre. Für stark gerichtetes Licht erscheinen die Werte zu hohen Dichten hin verschoben. Diese als Callier-Effekt bekannte Erscheinung entsteht durch Lichtstreuung an den Silberkörnern in der fotografischen Schicht und hängt im wesentlichen von deren Größe und Verteilung ab.

In der elektronischen Reproduktionstechnik tritt dieser Effekt bildverfälschend insbesondere dann in Erscheinung, wenn in sogenannten Flachbetttastern die plan liegende Vorlage durch einen quer zur Vorschubrichtung der Vorlage bewegten scharfgebündelten Lichtstrahl erfolgt. (Sogenannte "Flying Spot-Abtastung") In modernen Flachbettscannern finden als Lichtquellen Laser Verwendung, deren enges Lichtbündel nach Aufweitung über einen rotierenden Polygonspiegel geleitet wird und nach Korrektur der durch die Ablenkung entstandenen Fehler mittels einer sogenannten Scanner-Lens von dieser in der Vorlagenebene fokussiert wird. Durch den Polygonspiegel vollführt der Strahl eine Schwenkbewegung über die langsam rechtwinklig zur Schwenkebene vorgeschobene Vorlage, wodurch diese linienweise abgetastet wird. Das durch die Vorlage hindurchtretende Licht, dessen Intensität von der Schwärzung des jeweils vom Lichtstrahl getroffenen Bildpunktes abhängt, wird längs der Abtastlinie in geeigneter Weise einem fotoelektrischen Wandler zugeführt, der die Schwärzungswerte der Vorlage in serielle elektrische Signale umsetzt.

Ohne weitere Maßnahmen wären bei dieser Abtastart die Dichtewerte durch den oben beschriebenen Callier-Effekt verfälscht, was in der Wiederaufzeichnung störend in Erscheinung treten würde.

Aus der europäischen Patentschrift EP-A- 0065 242 ist eine Lichtaufnahmevorrichtung für Durchsichtsabtastung bekannt, bei der unterhalb der Vorlage parallel zur Abtastlinie ein innen teils verspiegeltes, teils diffus reflektierendes Rohr angebracht ist, das einen Längsschlitz parallel zur Abtastlinien aufweist, durch welchen das die Vorlage durchstrahlende Licht eintritt. Rechtwinklig versetzt zur Lichteintrittsachse sind die Endflächen eines Querschnittswandlers aus einer Vielzahl von Lichtleitfasern angeordnet.

Der Nachteil dieser Einrichtung liegt - abgesehen von dem außerordentlich geringen Wirkungsgrad - darin, daß die Aufnahme für die abzutastende Vorlage durchweg aus einer Glasplatte besteht, die aus Stabilitätsgründen beträchtliche Stärke haben muß. Um mindestens diese Glasstärke ist also der Lichteintrittsschlitz von der Vorlage entfernt. Andererseits muß der Lichteintrittsschlitz möglichst schmal sein, damit die Anordnung überhaupt mit vernünftigem Wirkungsgrad funktioniert. Daraus resultiert, daß die Eintrittsapertur für die Streukeule so stark eingeengt ist, daß der störende Einfluß des Callier-Effektes damit nur unvollkommen beeinflußt werden kann.

Schon bei mittleren Dichten ist nämlich der Öffnungswinkel der Streukeule des aus der Vorlage austretenden Lichtes wesentlich größer als der durch die Schlitzkanten begrenzte Eintrittswinkel in das Rohr. Das durch die Schlitzkanten abgedeckte Streulicht kann somit nicht zur Messung beitragen.

Der vorliegenden Erfindung liegt die Aufgabe zugrunde, eine Durchsichtsabtastung vorzugsweise für Flachbettabtaster anzugeben, die den Einfluß des Callier-Effektes eliminiert oder zumindest soweit mindert, daß er nicht mehr stört. Die Erfindung erreicht dies mit den im Anspruch 1 genannten Mitteln; vorteilhafte Weiterbildungen sind in den abhängigen Ansprüchen angegeben.

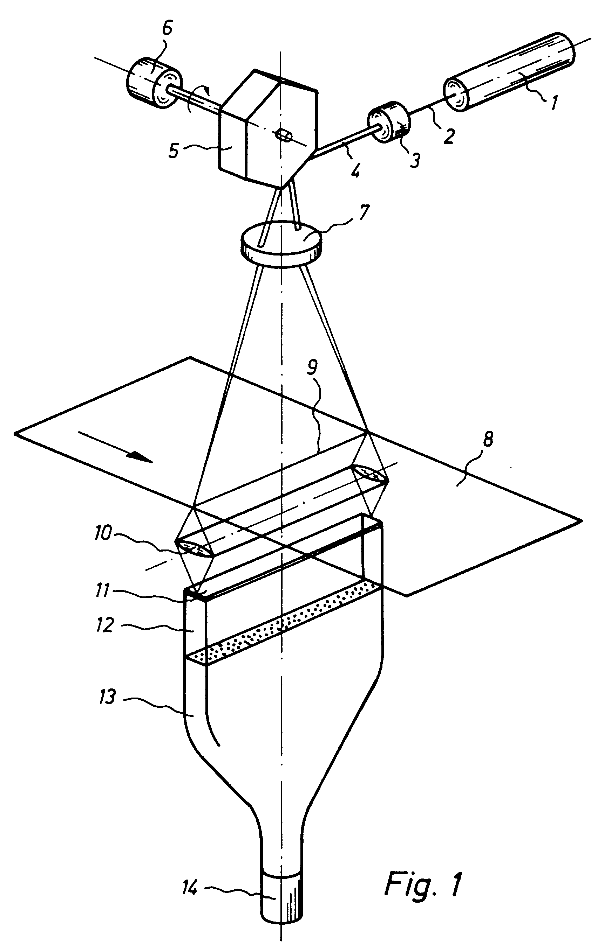

Die Erfindung wird im folgenden anhand der Figur näher erläutert. Die Figur zeigt schematisch die optische Anordnung.

Der von einem Laser 1 ausgesandte Lichtstrahl 2 wird über eine afokale Optik 3 zu einem parallelen Lichtbündel 4 aufgeweitet. Dieses fällt auf einen rotierenden Polygonspiegel 5, der von einem Motor 6 in Drehung versetzt wird. Der Polygonspiegel lenkt das Bündel durch eine sogenannte "Scanner-Lens" die einen f-O-Ausgleich bewirkt, d. h., sie kompensiert den Tangensfehler, den Einfluß der unterschiedlichen Winkelgeschwindigkeit und sorgt gleichzeitig dafür, daß die Fokussierung des Bündels über die gesamte gerade Abtastlinie 9 der planen Durchsichtsvorlage 8 erhalten bleibt. Die abzutastende Durchsichtsvorlage wird von einem hier nicht gezeigten Mechanismus langsam in Richtung des Pfeiles bewegt und auf diese Weise Linie für Linie abgetastet.

Durch den Callier-Effekt verläßt das relativ stark gerichtete eintretende Licht die Vorlage auf der Unterseite als mehr oder weniger weit geöffnete Keule. Die Streuung geschieht, wie oben beschrieben, an den Silberkörnern der Schicht und hängt von deren Größe und Verteilung ab. Die unter der Abtastlinie 9 angeordnete Zylinderlinse 10 fokussiert das Licht auf eine Streuscheibe 11. Ist keine Streuung vorhanden (Vorlage nicht geschwärzt, Dichte gleich null), so wird auf der Streuscheibe nur ein kleiner Fokuspunkt abgebildet. Bei stärkerer Schwärzung, d. h. größerer Streuung, dagegen, wird der Fokusfleck die Gestalt einer mehr oder weniger länglichen Ellipse annehmen, deren große Achse parallel zur Abtastlinie 9 liegt. Die Streuscheibe 11 bildet die Frontfläche eines sogenannten Lichtmischers 12, der im wesentlichen aus einem quaderförmigen Stück eines lichtdurchlässigen Materials - etwa Glas oder Plexiglas - besteht und dessen Außenflächen poliert sind. Das aus der Streuscheibe 11 austretende stark gestreute Licht wird in diesem Körper über vielfache Reflektionen zu dessen Unterseite geleitet, die damit weitgehend unabhängig von der Gestalt des Fokusflecks auf der Streufolie großflächig ausgeleuchtet wird. Damit ist der Einfluß des Callier-Effektes eliminiert oder zumindest so stark reduziert, daß er für die Praxis nicht mehr störend in Erscheinung tritt. Aus der Unterseite des Lichtmischers 12 tritt das Licht in einen Querschnittswandler 13 über, der aus einer Vielzahl ungeordneter Lichtleitfasern besteht. Am Lichtmischer 12 hat das Bündel die Form der Unterseite des Lichtmischers 12 und ist am anderen Ende zu einem Querschnitt zusammengefaßt, der im wesentlichen der Form der sensitiven Schicht des fotoelektrischen Wandlers 14 entspricht. Dieser liefert elektrische Ausgangssignale, die durch die erfingungsgemäße Anordnung weitgehend vom Einfluß des Callier-Effektes befreit sind.

## Patentansprüche

1. Einrichtung zum Eliminieren des Callier-Effekts beim Abtasten von vorzugsweise plan liegenden Durchsichtsvorlagen, wobei der von einem Laser erzeugte Lichtstrahl von einem rotierenden Polygonspiegel Linie für Linie über die rechtwinklig zu dieser Abtastrichtung bewegte Vorlage geführt wird, wobei das durch die Vorlage hindurchtretende Licht auf eine Streuscheibe eines Lichtmischers geleitet wird, an dessen Austrittsfläche ein vorzugsweise aus einer Vielzahl von einzelnen Lichtleitfasern gebildeten Querschnittswandlers angeordnet ist, dessen geo- metrische Form am Eintrittsende der Form der Lichtaustrittsfläche des Lichtmischers und dessen anderes Ende der Form der sensitiven Schicht des fotoelektrischen Wandlers entspricht, dadurch gekennzeichnet, daß die als für das Licht durchlässig ausgebildete Streuscheibe die Eintrittsfläche des im wesentlichen quaderförmigen und aus durchsichtigem Material bestehenden Lichtmischers bildet und das durch die Vorlage hindurchtretende Licht über mindestens eine Zylinderlinse direkt auf diese Streuscheibe geleitet wird, und daß die Austrittsfläche des Lichtmischers dessen Eingangsfläche gegenüberliegt.

2. Einrichtung nach Anspruch 1 dadurch gekennzeichnet, daß zur Bündelung der aus der Durchsichtsvorlage austretenden Lichtkeule statt der Zylinderlinse eine Fresnel-Linse verwendet wird.

3. Einrichtung nach Anspruch 1 dadurch gekennzeichnet, daß zur Bündelung der aus der Durchsichtsvorlage austretenden Lichtkeule eine holografische Linse verwendet wird.

4. Einrichtung nach einem der Ansprüche 1 - 3 dadurch gekennzeichnet, daß an Stelle der Streuscheibe ein Beugungsgitter verwendet wird.

5. Einrichtung nach einem der Ansprüche 1 - 4 dadurch gekennzeichnet, daß mindestens eine der Außenflächen des Lichtmischers verspiegelt ist.

## Claims

1. A device for eliminating the Callier effect in the scanning of transparent originals, preferably lying flat, in which the light beam, which is produced by a laser, is guided by a rotating polygonal mirror line by line over the original, which is moved at right angles to this scanning direction, in which the light penetrating through the original is directed onto a diffusing screen of a light mixer, on the outlet surface of which a sectional converter is arranged, preferably formed from a plurality of individual photoconductor fibres, the geometric shape of which converter at the inlet end corresponds to the shape of the light outlet surface of the light mixer, and the other end of which corresponds to the shape of the sensitive layer of the photoelectric converter,
characterised in that
the diffusing screen, which is constructed so as to be penetrable by the light, forms the inlet surface of the light mixer, which is substantially of parallepiped shape and consists of transparent material and the light, passing through the original, is directed via at least one cylindrical lens directly onto this diffusing screen, and that the outlet surface of the light mixer lies opposite its inlet surface.

2. A device according to Claim 1, characterised in that for the bunching of the lobe of light emerging out of the transparent original, a fresnel lens is used, instead of the cylindrical lens.

3. A device according to Claim 1, characterised in that for the bunching of the lobe of light emerging out of the transparent original, a holographic lens is used.

4. A device according to one of Claims 1 - 3, characterised in that instead of the diffusing screen, a diffraction screen is used.

5. A device according to one of Claims 1 - 4, characterised in that at least one of the outer surfaces of the light mixer has a reflecting coating.

**Revendications**

1. Installation pour éliminer l'effet Callier lors de la détection d'originaux par transparence, de préférence plans, le faisceau de lumière engendré par un laser étant conduit par un miroir polygonal rotatif, ligne par ligne par-dessus le modèle déplacé à l'équerre par rapport à cette direction de détection et dans laquelle la lumière traversant le modèle est conduite sur une plaque de dispersion d'un mélangeur de lumière, dont la surface de sortie est formée par un convertisseur de section constitué de préférence d'un grand nombre de fibres optiques distinctes, et dont la forme géométrique à l'extrémité d'incidence correspond à la forme de la surface de sortie de la lumière du mélangeur de lumière et dont l'autre extrémité a la forme de la couche sensible du convertisseur photo-électrique,
installation caractérisée en ce que la plaque de dispersion réalisée de manière transparente à la lumière forme la surface d'entrée du mélangeur de lumière essentiellement rectangulaire et réalisée en un matériau transparent et en ce que la lumière qui traverse l'original est conduite sur cette plaque de dispersion par l'intermédiaire d'au moins une lentille cylindrique et en ce que la surface de sortie du mélangeur de lumière est en regard de sa surface d'entrée.

2. Installation selon la revendication 1, caractérisée en ce que pour regrouper le cône de lumière sortant de l'original par transparence, on utilise une lentille de Frenel à la place d'une lentille cylindrique.

3. Installation selon la revendication 1, caractérisée en ce que pour regrouper le cône de lumière sortant de l'original par transparence, on utilise une lentille holographique.

4. Installation selon l'une des revendications 1 à 3, caractérisée en ce qu à la place de la plaque de dispersion, on utilise un réseau à diffraction.

5. Installation selon l'une des revendications 1 à 4, caractérisée en ce qu'au moins l'une des surfaces extérieures du mélangeur de lumière est formée par un miroir.

Fig. 1